# EUROPEAN PATENT SPECIFICATION

(11) **EP 0 982 546 B1**
(45) Date of publication and mention of the grant of the patent: **01.06.2005**
(21) Application number: 99306495.5
(22) Date of filing: 17.08.1999
(51) Int. Cl.: F23R 3/42, F23R 3/16, F23R 3/04, F23R 3/02

(54) **Combustor baffle**
Leitblech für eine Brennkammer
Déflecteur pour une chambre de combustion

(30) Priority: 24.08.1998 US 138728
(43) Date of publication of application: 01.03.2000
(73) Proprietor: GENERAL ELECTRIC COMPANY, Schenectady, NY 12345 (US)
(72) Inventor: Tekriwal, Prabhat Kumar, Schenectady, New York 12309 (US); Davis, Lewis Berkely, Jr., Niskayuna, New York 12309 (US); Mick, Warren James, Altamount, New York 12009 (US)
(74) Representative: Goode, Ian Roy

(56) References cited:
- EP-A- 0 455 487
- US-A- 4 173 118
- US-A- 4 292 801
- US-A- 4 374 466
- US-A- 5 778 676

## Description

This invention relates generally to power generation combustors and more specifically to combustor baffles.

Industrial power generation gas turbine engines include a compressor for compressing air that is mixed with fuel and ignited in a combustor for generating combustion gases. The combustion gases flow to a turbine that extracts energy for driving a shaft to power the compressor and produces output power for powering an electrical generator, for example. The turbine is typically operated for extended periods of time at a relatively high base load for powering the generator to produce electrical power to a utility grid, for example. Exhaust emissions from the combustion gases are therefore a concem and are subjected to mandated limits.

Gas turbine combustors are being developed that employ lean premixed combustion to reduce emissions of gases such as NOx (nitrogen oxides). One such combustor, see e.g. US-A-4292801, comprises a plurality of bumers attached to a single combustion chamber. Each bumer includes a flow tube with a centrally disposed fuel nozzle comprising a center hub which supports fuel injectors and swirl vanes. During operation, fuel is injected through the fuel injectors and is mixed with the swirling air in the flow tube, and a flame is produced at the exit of the bumer. The combustion flame is stabilized by a combination of bluffbody recirculation behind the center hub and swirl-induced recirculation. Because of the lean stoichiometry, lean premixed combustion achieves lower flame temperature and thus produces lower NOx emissions.

These premixed systems, however, are susceptible to an unpredictable phenomena commonly referred to as "flashback." Flashback is caused by any of a number of events including ignition of impurities in fuel or ignition during mode switching when the flames are in a transient phase. When flashback occurs, a flame enters zones or cavities of the combustor chamber that are not designed to contain flames. One such zone where a flashback is of concem is the region between the fuel nozzles up against the endcover. The recirculating air flow pattern in this region and the possible presence of fuel makes it susceptible to flashback. A flashback in this area can result in a loss of combustion control and can additionally cause heating and melting of combustor parts like fuel nozzles, for example, that are not designed to withstand excessive heating.

Furthermore, the ever increasing demand for turbines with improved thermodynamic efficiency has resulted in higher turbine inlet temperatures. The higher turbine inlet temperatures create a corresponding increase in compressor discharge temperatures and pressure ratio. The combination of these conditions make the autoignition of fuel more likely.

Accordingly, there is a need in the art for improved recirculation within the endcover region to reduce the occurrence of flashback.

According to the present invention, there is provided a combustor assembly comprising a plurality of circumferentially arranged fuel nozzles, which fuel nozzles have a first end coupled to a combustion chamber and a second end attached to an endcover. The plurality of fuel nozzles define a central region therebetween. A baffle is disposed within the central region. The baffle has an upstream base portion adjacent the endcover and a contoured downstream portion having a width that is smaller with respect to a width of the upstream base portion so as to transition a recirculating flow into a downstream flow to minimize flashback occurrences within the central region.

Embodiments of the invention will now be described, by way of example, with reference to the accompanying drawings, in which:
Fig. 1 is a schematic illustration of a conventional industrial turbine engine;
Fig. 2 is a schematic plan view of one end of an exemplary combustor nozzle arrangement;
Fig. 3 is a schematic side elevation view with parts removed of an exemplary combustor nozzle arrangement;
Fig. 4 is a schematic side elevation view with parts removed of a combustor nozzle arrangement in accordance with one embodiment of the instant invention;
Fig. 5 is a schematic, cross-sectional, side elevation view of a combustor baffle in accordance with one embodiment of the instant invention;
Fig. 6 is a schematic plan view of one end of the combustor nozzle arrangement of Fig. 4;
Fig. 7 is a schematic, cross-sectional, side elevation view of a combustor baffle in accordance with another embodiment of the instant invention;
Fig. 8 is an exemplary pattern of velocity vectors colored by velocity magnitude within a central region without a baffle;
Fig. 9 is an exemplary pattern of velocity vectors colored by velocity magnitude within a central region with a baffle in accordance with the one embodiment of instant invention; and
Fig. 10 is an exemplary pattern of velocity vectors colored by velocity magnitude within a central region with another baffle in accordance with one other embodiment of the instant invention.

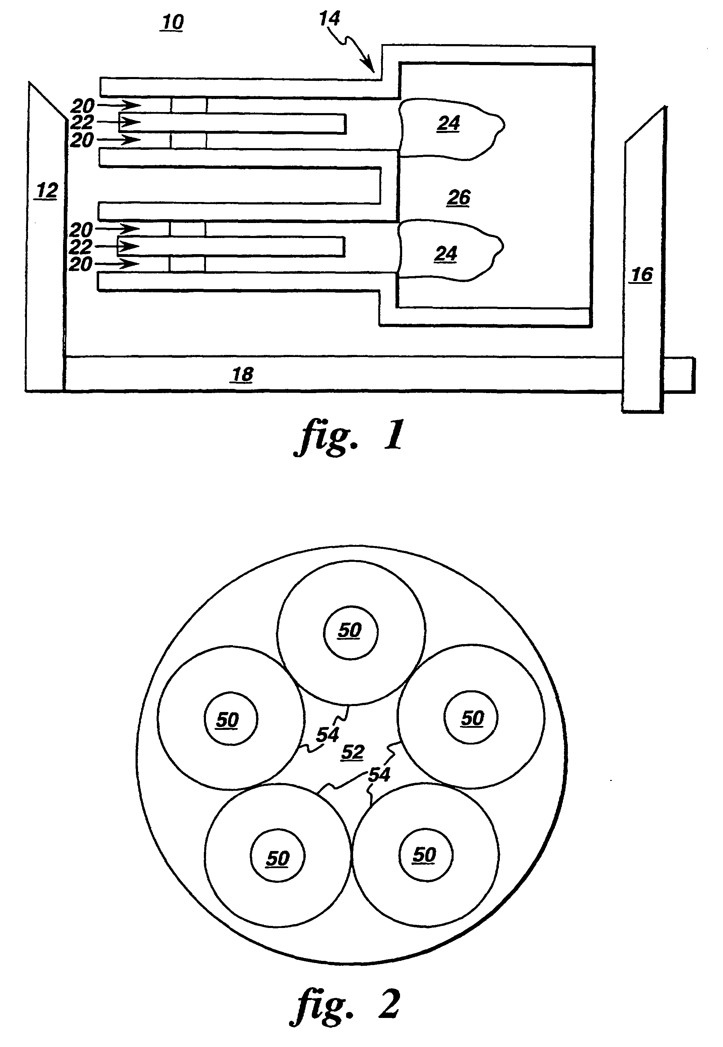

An industrial turbine engine 10 includes a compressor 12 disposed in serial flow communication with a combustor assembly 14 and a single or multi-stage turbine 16, as shown in FIG. 1. Turbine 16 is coupled to compressor 12 by a drive shaft 18, a portion of which drive shaft 18 extends for powering an electrical generator (not shown) for generating electrical power. During operation, compressor 12 discharges compressed air 20 into combustor assembly 14 wherein compressed air 20 is mixed with fuel 22 and ignited for generating combustion gases 24 in a combustion chamber 26 from which energy is extracted by turbine 16 for rotating shaft 18 to power compressor 12, as well as producing output power for driving the generator or other extemal load.

Each combustor assembly 14 has a plurality, for example five, concentrically and circumferentially disposed upstream nozzles 50, as shown in the schematic plan view of FIG. 2. Each nozzle 50 is coupled to a pair of circumferentially disposed adjacent nozzles 50 so as to form a concentric nozzle arrangement of circumferentially adjoining nozzles 50. The concentric arrangement of nozzles 50 defines a central region 52 therebetween. An outer portion 54 of each nozzle 50 defines an outer extremis of central region 52. In one embodiment, outer portion 54 of each nozzle 50 is arcuate thereby defining a star-shaped outer extremis geometry for central region 52.

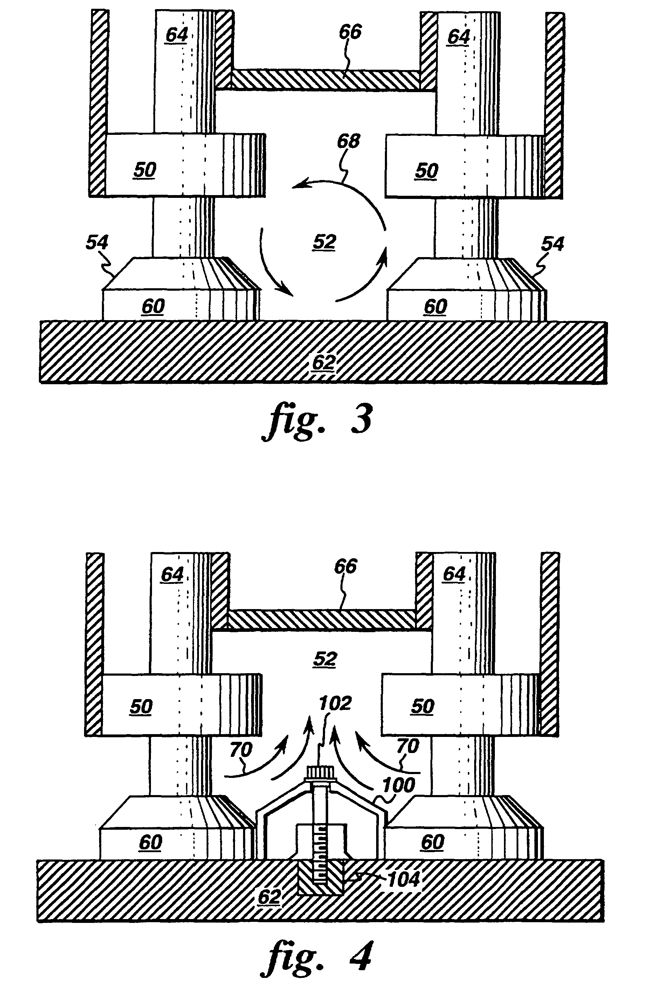

Each nozzle 50 comprises a first end 60 coupled to an end cover 62 and a second end 64 coupled to combustor assembly 14 (FIG. 1) to supply premixed fuel 22 and air 20 into combustion chamber 26 for combustion therein, as shown in FIG. 3. An end-plate 66 is typically disposed adjacent second end 64 of nozzle 50 interconnecting each circumferentially adjoining nozzle 50 and preventing unwanted back-flow of any fuel air mixture exiting second end 64, within central region 52. Accordingly, central region 52 is typically a chamber defined by end-cover 62, adjoining outer portions 54 of nozzles 50 and end plate 66.

As discussed above, recirculation air 68 is typically found within central region 52. The presence of fuel within central region 52 combined with recirculation air 68 provides an optimal region for flashback to occur.

In accordance with one embodiment of the instant invention, a baffle 100 is disposed within central region 58 to minimize air recirculation therein, as shown in FIG. 4. In one embodiment, baffle 100 is affixed to endcover 62 with a fastener 102, threadingly engaged with a bore 104 disposed within endcover 62. In one embodiment, fastener 102 is a 5/8" x 64.0 mm (5/8" x 2.5") reduced shank UNC bolt. In an altemative embodiment, baffle 100 is integral with end cover 62 and machined to appropriate dimensions during a manufacturing process.

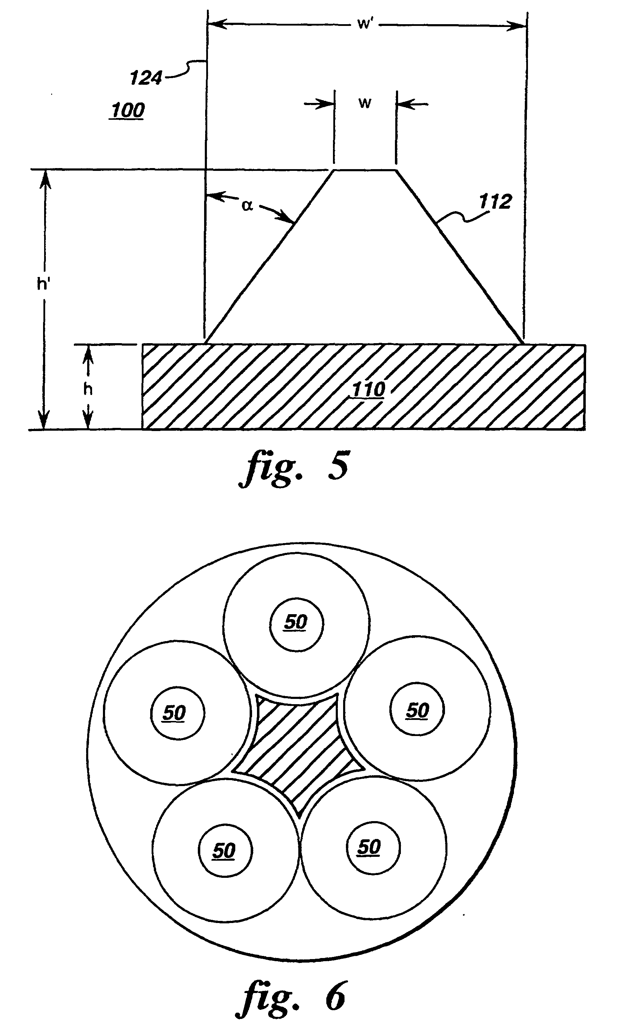

Baffle 100 consists of an upstream base portion 110 adjacent endcover 62 and a contoured downstream portion 112 having a width that is smaller with respect to a width of upstream base portion 110, as best shown in Fig. 5. In one embodiment, baffle 100 is made of Hastelloy X.

Baffle 100 transitions recirculating air flow 68 (FIG. 3) into non-recirculating flow 70 (FIG. 4). Accordingly, because non-recirculating flow 70 moves fuel and air downstream toward combustion chamber 26 (FIG. 1) flashback occurrences within central region 52 (FIG. 4) are minimized and even eliminated.

Upstream base portion 110 is configured to be matedly disposed between respective outer portions of nozzles 50 (FIG. 4). In one embodiment, the height (h) of base portion 110 is in the range between about 6.4 mm (0.25 inches) and about 28.58 mm (1.125 inches) (FIG. 5). In one embodiment, baffle 100 has a height (h') in the range between about 38.0 mm (1.5 in.) and about 64.0 mm (2.5 in.).

In one embodiment, contoured downstream portion 112 narrows from a width (w) in the range between about 76.0 mm (3.0 inches) and about 102.0 mm (4.0 inches) at an upstream portion to a width (w') in the range between about 19.0 mm (0.75 inches) and about 33.0 mm (1.30 inches) at a downstream portion to create a conical shaped contour.

In one embodiment of the instant invention, contoured upstream portion 112 narrows from wider downstream base portion 110 at an angle (α) in the range between about 35° to about 55°, typically 45°, with respect to a reference line 124. Reference line 124 is typically inclined perpendicular to end cover 62.

In one embodiment, five nozzles define a central region 52 having a geometric shape of a five-pointed star. Accordingly, in this embodiment, baffle 100 has a generally star-shaped geometry so as to uniformly mate with each of the five nozzles as best shown in Fig. 6.

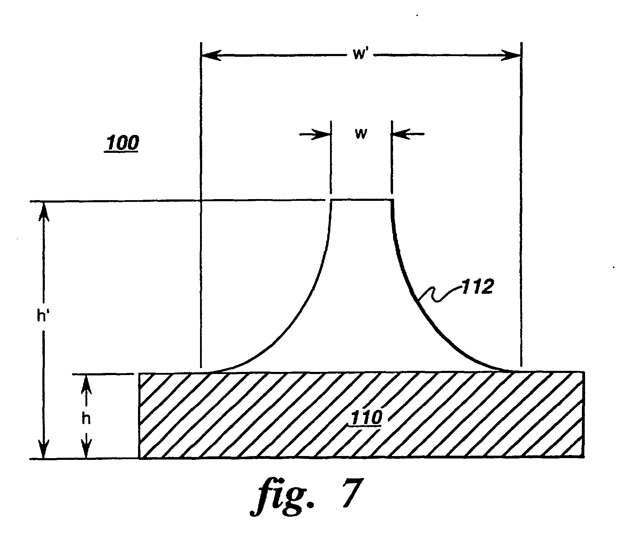

In another embodiment 200, as shown in Fig. 7, contoured upstream portion 112 narrows from a wider base portion to a narrower downstream portion so as to create a quasi-conical contour. The outer surface is contoured as an arc defined by an axial length (h'-h in Fig. 7) in the range between about 31.8 mm (1.25 inches) and about 34.93 mm (1.375 inches) and a radius of curvature of about 56.0 mm (2.2 inches). This baffle design is more aerodynamic in shape and conforms to the fluid flow better by providing less blockage (or resistance) to the flow. This baffle design, therefore, is expected to yield lower pressure drop requirements. The lower pressure drop offers the advantage of lower pumping cost.

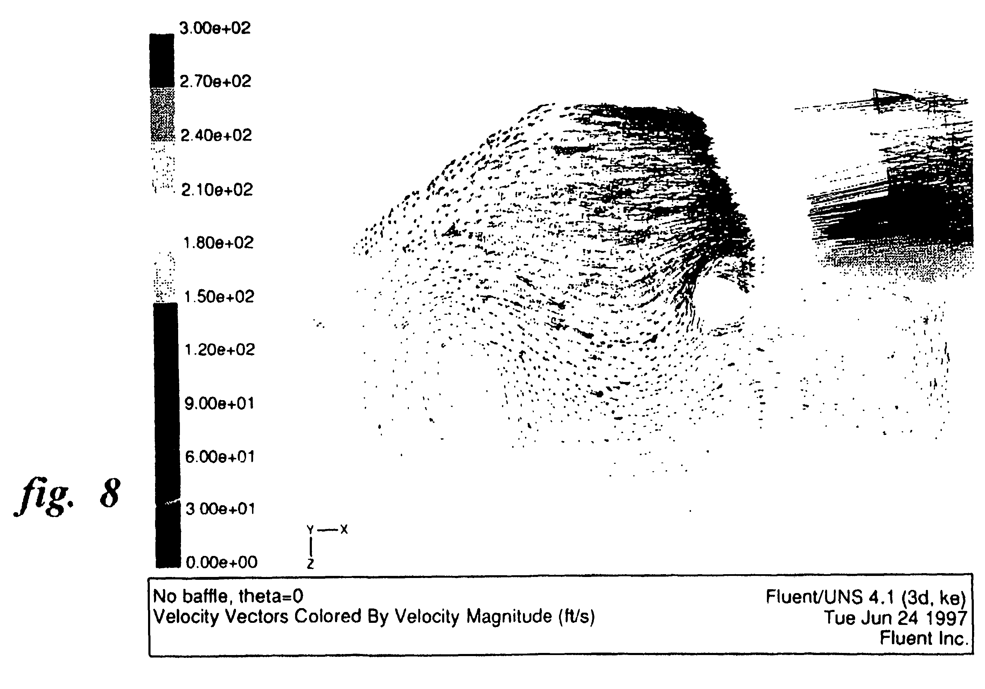

FIG. 8 depicts an exemplary pattern of velocity vectors colored by velocity magnitude within central region without baffle. A large recirculation zone in central region near endcover plate is seen. This recirculation zone is a potential sight of flashback and flame holding. Relatively weaker recirculation zones also exist axially downstream of nozzle in a dead region. The relatively stronger recirculation zone near endcover provides a site for flashback in the presence of fuel and should be eliminated to avoid the flame-holding in the central region. Presence of fuel in central region could be either intentional by design to achieve better combustion and flame stability or unintentional due to fuel leak.

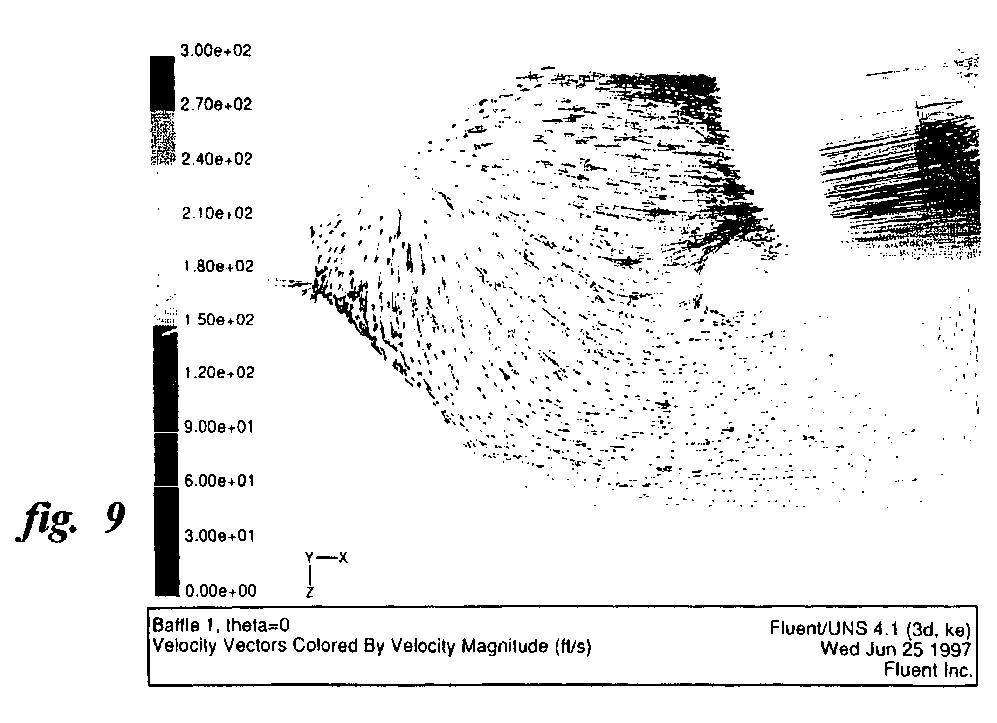

FIG. 9 depicts an exemplary pattern of velocity vectors colored by velocity magnitude within a central region with baffle 100. The strong recirculation zone in central region near endcover (as seen in FIG. 8) is eliminated in FIG. 9. Accordingly, baffle 100 eliminates a potential sight for flame holding should flashback occur in central region. This configuration, however, does show the presence of a "weak" recirculation downstream in the dead region.

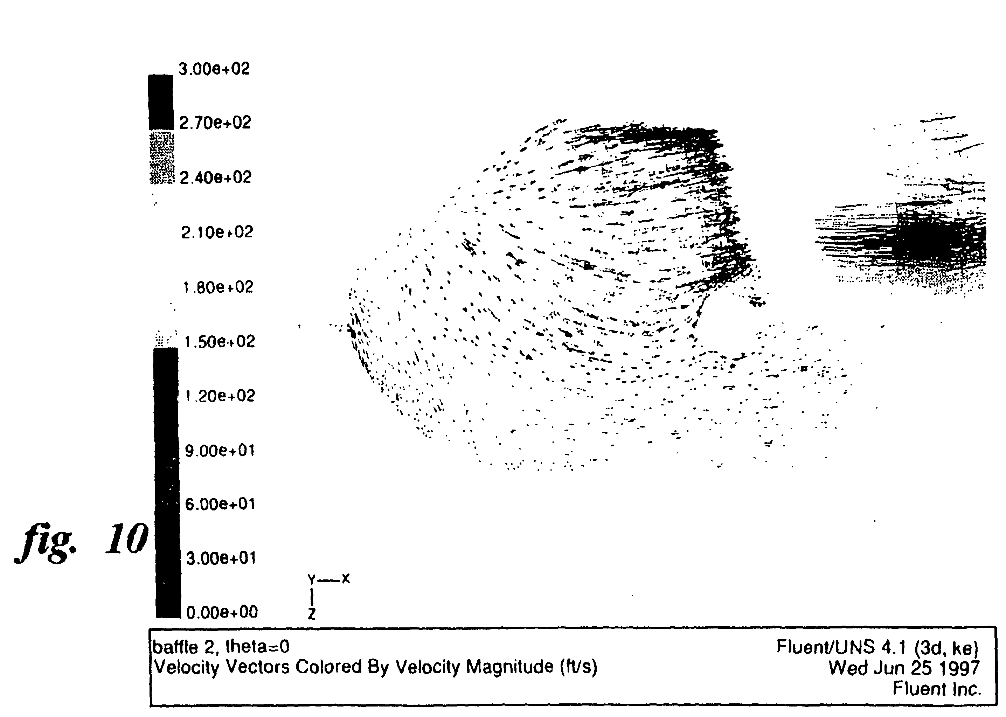

FIG. 10 depicts an exemplary pattern of velocity vectors colored by velocity magnitude within a central region with another baffle design 200. The strong recirculation zone in central region near endcover (as seen in FIG. 8) is eliminated also in FIG. 10. Thus this design also eliminates the potential sight for flame holding should the flashback occur in central region. In addition, this baffle design also eliminates the "weak" downstream recirculation.

## Claims

1. A combustor assembly (14) comprising:
a plurality of circumferentially arranged fuel nozzles (50), which fuel nozzles (50) have a first end (64) coupled to a combustion chamber (26) and a second end (60) attached to an endcover (62), said plurality of fuel nozzles (50) defining a central region (52) therebetween; and **characterized by**:
a baffle (100) disposed within said central region (52), which baffle (100) has an upstream base portion (110) adjacent said endcover (62) and a contoured downstream portion (112) having a width that is smaller with respect to a width of said upstream base portion (110) so as to transition a recirculating flow (68) into a downstream flow (70) to minimize flashback occurrences within said central region (52).

2. A combustor assembly (14) in accordance with claim 1, wherein the number of said plurality of fuel nozzles (50) is five.

3. A combustor assembly (14) in accordance with claim 1, wherein said baffle (100) is coupled to said endcover (62) with a fastener (102) threadingly engaged with a bore (104) disposed within said endcover (62).

4. A combustor assembly (14) in accordance with claim 1, wherein said baffle (100) is made of Hastelloy X.

5. A combustor assembly (14) in accordance with claim 1, wherein said base portion (110) of said baffle (100) is configured so as to be matedly disposed with respective outer surfaces (54) of said plurality of nozzles (50).

6. A combustor assembly (14) in accordance with claim 1, wherein said base portion (110) of said baffle (100) has a height in the range between 0.25 inches and about 1.125 inches.

7. A combustor assembly (14) in accordance with claim 1, wherein said contoured downstream portion (112) is contoured as an arc defined by an axial length in the range between about 1.25 inches and about 1.375 inches and a radius of curvature of about 2.2 inches.

8. A combustor assembly (14) in accordance with claim 2, wherein said base portion (110) is configured in a generally star-shaped configuration so as to be matedly disposed with respective outer surfaces (54) of said five fuel nozzles (50).

9. A combustor assembly (14) in accordance with claim 1, wherein said contoured downstream portion (112) is conically-shaped.

10. A combustor assembly (14) in accordance with claim 1, wherein said baffle (100) has a height in the range between about 1.5 inches and about 2.5 inches.

11. An industrial turbine engine (10) having a combustor assembly (14) comprising:
a plurality of circumferentially arranged fuel nozzles (50), which fuel nozzles (50) have a first end (64) coupled to a combustion chamber (26) and a second end (60) attached to an endcover (62), said plurality of fuel nozzles (50) defining a central region (52) therebetween; and **characterized by**
a baffle (100) disposed within said central region (52), which baffle (100) has an upstream base portion (110) adjacent said endcover (62) and a contoured downstream portion (112) having a width that is smaller with respect to a width of said upstream base portion (110) so as to transition a recirculating flow (68) into a downstream flow (70) to minimize flashback occurrences within said central region (52).

12. An industrial turbine engine (10) in accordance with claim 11, wherein said base portion (110) of said baffle (100) is configured so as to be matedly disposed with respective outer surfaces (54) of said plurality of nozzles (50) .

## Patentansprüche

1. Brennkammereinrichtung (14) mit:
mehreren kreisförmig angeordneten Brennstoffdüsen (50), wobei die Brennstoffdüsen ein erstes Ende (64), das zu einer Brennkammer (26) führt, und ein zweites Ende (60) aufweisen, das an einem Abschlussdeckel (62) befestigt ist, wobei die mehreren Brennstoffdüsen (50) zwischen einander einen zentralen Bereich (52) festlegen; und **gekennzeichnet durch**:
ein Leitblech (100), das in dem zentralen Bereich (52) angeordnet ist, wobei das Leitblech (100) einen stromaufwärts liegenden Grundabschnitt (110) in der Nähe des Abschlussdeckels (62) und einen stromabwärtsliegenden Formabschnitt (112) aufweist, dessen Weite kleiner ist als eine Weite des stromaufwärts liegenden Grundabschnitts (110), um eine Rezirkulationsströmung (68) in eine stromabwärts führende Strömung (70) zu überführen, um das Auftreten von Flammenrückschlägen in dem zentralen Bereich (52) auf ein Minimum zu reduzieren.

2. Brennkammereinrichtung (14) nach Anspruch 1, wobei die Anzahl der mehreren Brennstoffdüsen (50) fünf beträgt.

3. Brennkammereinrichtung (14) nach Anspruch 1, wobei das Leitblech (100) mit dem Abschlussdeckel (62) mittels eines Befestigungsmittels (102) verbunden ist, das in eine Bohrung (104) eingeschraubt ist, die in dem Abschlussdeckel (62) angeordnet ist.

4. Brennkammereinrichtung (14) nach Anspruch 1, wobei das Leitblech (100) aus Hastelloy X hergestellt ist.

5. Brennkammereinrichtung (14) nach Anspruch 1, wobei der Grundabschnitt (110) des Leitblechs (100) derart ausgestaltet ist, um in Bezug auf Außenflächen (54) der mehreren Düsen (50) passend angeordnet zu sein.

6. Brennkammereinrichtung (14) nach Anspruch 1, wobei der Grundabschnitt (110) des Leitblechs (100) eine Höhe in dem Bereich zwischen 0,25 Zoll und ungefähr 1,125 Zoll aufweist.

7. Brennkammereinrichtung (14) nach Anspruch 1, wobei der stromabwärts liegende Formabschnitt (112) als ein Bogen profiliert ist, der durch eine axiale Länge in dem Bereich zwischen ungefähr 1,25 Zoll und ungefähr 1,375 Zoll und einen Krümmungsradius von ungefähr 2,2 Zoll definiert ist.

8. Brennkammereinrichtung (14) nach Anspruch 2, wobei der Grundabschnitt (110) in einer im Wesentlichen sternförmigen Konfiguration ausgestaltet ist, um in Bezug auf Außenflächen (54) der fünf Brennstoffdüsen (50) passend angeordnet zu sein.

9. Brennkammereinrichtung (14) nach Anspruch 1, wobei der stromabwärts liegende Formabschnitt (112) konisch gestaltet ist.

10. Brennkammereinrichtung (14) nach Anspruch 1, wobei das Leitblech (100) eine Höhe in dem Bereich zwischen ungefähr 1,5 Zoll und ungefähr 2,5 Zoll aufweist.

11. Industrielles Turbinentriebwerk (10) mit einer Brennkammereinrichtung (14), die aufweist:
mehrere kreisförmig angeordnete Brennstoffdüsen (50), wobei die Brennstoffdüsen (50) ein erstes Ende (64), das zu einer Brennkammer (26) führt, und ein zweites Ende (60) aufweisen, das an einem Abflussdeckel (62) befestigt ist, wobei die mehreren Brennstoffdüsen (50) zwischen einander einen zentralen Bereich (52) bilden; und **gekennzeichnet durch**
ein Leitblech (100), das in dem zentralen Bereich (52) angeordnet ist, wobei das Leitblech (100) einen stromaufwärts liegenden Grundabschnitt (110) in der Nähe des Abflussdeckels (62) und einen stromabwärts liegenden Formabschnitt (112) aufweist, der eine Weite aufweist, die kleiner ist als eine Weite des stromaufwärts liegenden Grundabschnitts (110), um eine Rezirkulationsströmung (68) in eine stromabwärts führende Strömung (70) zu überführen, um ein Auftreten von Flammenrückschlägen in dem zentralen Bereich (52) auf ein Minimum zu reduzieren.

12. Industrielles Turbinentriebwerk (10) nach Anspruch 11, wobei der Grundabschnitt (110) des Leitblechs (100) derart konfiguriert ist, um in Bezug auf Außenflächen (54) der mehreren Düsen (50) passend angeordnet zu sein.

## Revendications

1. Assemblage de dispositif de combustion (14) comprenant :
une pluralité d'injecteurs de carburant agencés de manière périphérique (50), lesquels injecteurs de carburant (50) ont une première extrémité (64) couplée à une chambre de combustion (26) et une seconde extrémité (60) attachée à un couvercle d'extrémité (62), lesdits injecteurs de carburant (50) définissant une région centrale (52) entre eux ; et **caractérisé par** :
un déflecteur (100) placé dans ladite région centrale (52), lequel déflecteur (100) a une partie de base amont (110) voisine dudit couvercle d'extrémité (62) et une partie aval profilée (112) ayant une largeur inférieure à la largeur de ladite partie de base amont (110) afin de réaliser une transition d'un flux de recirculation (68) à un flux aval (70) pour minimiser les retours de flamme dans ladite région centrale (52).

2. Assemblage de dispositif de combustion (14) selon la revendication 1, dans lequel le nombre desdits injecteurs de carburant (50) est de cinq.

3. Assemblage de dispositif de combustion (14) selon la revendication 1, dans lequel ledit déflecteur (100) est couplé audit couvercle d'extrémité (62) au moyen d'un élément de fixation (102) vissé dans un trou (104) prévu dans ledit couvercle d'extrémité (62).

4. Assemblage de dispositif de combustion (14) selon la revendication 1, dans lequel ledit déflecteur (100) est en alliage Hastelloy X.

5. Assemblage de dispositif de combustion (14) selon la revendication 1, dans lequel ladite partie de base (110) dudit déflecteur (100) est configurée de façon à pouvoir être disposée de manière complémentaire par rapport aux surfaces extérieures respectives (54) desdits injecteurs (50).

6. Assemblage de dispositif de combustion (14) selon la revendication 1, dans lequel ladite partie de base (110) dudit déflecteur (100) a une hauteur comprise dans l'intervalle de 6,35 mm (0,25 pouce) à 28,58 mm environ (1,125 pouce).

7. Assemblage de dispositif de combustion (14) selon la revendication 1, dans lequel ladite partie aval profilée (112) a un profil d'arc défini par une longueur axiale comprise dans l'intervalle d'environ 31,75 mm (1,25 pouce) à environ 34,93 mm (1,375 pouce) et un rayon de courbure d'environ 55,88 mm (2,2 pouces).

8. Assemblage de dispositif de combustion (14) selon la revendication 2, dans lequel ladite partie de base (110) est globalement en configuration en étoile afin de pouvoir être disposée de manière complémentaire par rapport aux surfaces extérieures (54) desdits cinq injecteurs de carburant (50).

9. Assemblage de dispositif de combustion (14) selon la revendication 1, dans lequel ladite partie aval profilée (112) est de forme conique.

10. Assemblage de dispositif de combustion (14) selon la revendication 1, dans lequel ledit déflecteur (100) a une hauteur comprise dans l'intervalle d'environ 38,1 mm (1,5 pouce) à environ 63,5 mm (2,5 pouces).

11. Moteur industriel à turbine (10) comportant un assemblage de dispositif de combustion (14) comprenant :
une pluralité d'injecteurs de carburant agencés de manière périphérique (50), lesquels injecteurs de carburant (50) ont une première extrémité (64) couplée à une chambre de combustion (26) et une seconde extrémité (60) attachée à un couvercle d'extrémité (62), lesdits injecteurs de carburant (50) définissant une région centrale (52) entre eux ; et **caractérisé par** :
un déflecteur (100) placé dans ladite région centrale (52), lequel déflecteur (100) a une partie de base amont (110) voisine dudit couvercle d'extrémité (62) et une partie aval profilée (112) ayant une largeur inférieure à la largeur de ladite partie de base amont (110) afin de réaliser une transition d'un flux de recirculation (68) à un flux aval (70) pour minimiser les retours de flamme dans ladite région centrale (52).

12. Moteur industriel à turbine (10) selon la revendication 11, dans lequel ladite partie de base (110) dudit déflecteur (100) est configurée de façon à pouvoir être disposée de manière complémentaire par rapport aux surfaces extérieures respectives (54) desdits injecteurs (50).
